# EUROPÄISCHE PATENTSCHRIFT

(11) **EP 1 511 658 B1**
(45) Veröffentlichungstag und Bekanntmachung des Hinweises auf die Patenterteilung: **30.07.2008**
(21) Anmeldenummer: 03755911.9
(22) Anmeldetag: 26.05.2003
(51) Int. Cl.: B60R 21/16

(54) **MEHRTEILIGER GASSACKZUSCHNITT FÜR EINEN GASSACK EINER INSASSENSCHUTZEINRICHTUNG FÜR KRAFTFAHRZEUGE UND VERFAHREN ZUR HERSTELLUNG EINES GASSACKES AUS DEM GASSACKZUSCHNITT**
MULTIPART AIRBAG CUTTING FOR AN AIRBAG OF AN OCCUPANT PROTECTION DEVICE FOR MOTOR VEHICLES AND METHOD FOR PRODUCING AN AIRBAG FROM SAID AIRBAG CUTTING
DECOUPE DE SAC GONFLABLE EN PLUSIEURS PARTIES POUR SAC GONFLABLE EQUIPANT UN DISPOSITIF DE PROTECTION DES OCCUPANTS D'UN VEHICULE, ET PROCEDE DE FABRICATION D'UN SAC GONFLABLE A PARTIR DE CETTE DECOUPE

(30) Priorität: 28.05.2002 DE 10223830
(43) Veröffentlichungstag der Anmeldung: 09.03.2005
(73) Patentinhaber: TAKATA CORPORATION, Minato-ku, Tokyo 106-8510 (JP)
(72) Erfinder: WEYRICH, Christian, 89231 Neu-Ulm (DE); SENDELBACH, Hans-Peter, 89250 Senden (DE)
(74) Vertreter: Baumgärtel, Gunnar
(86) Internationale Anmeldenummer: PCT/DE2003/001759
(87) Internationale Veröffentlichungsnummer: WO 2003/101788

(56) Entgegenhaltungen:
- DE-A- 4 142 326
- US-A- 5 683 109
- US-A- 5 906 391
- US-A- 5 975 564
- PATENT ABSTRACTS OF JAPAN vol. 2000, no. 05, 14. September 2000 (2000-09-14) & JP 2000 052913 A (UCHIDA TOSHIKI), 22. Februar 2000 (2000-02-22)

## Beschreibung

Die Erfindung betrifft einen mehrteiligen Gassackzuschnitt für einen Gassack einer Insassenschutzeinrichtung für Kraftfahrzeuge sowie ein Verfahren zur Herstellung eines Gassackes aus einem derartigen Gassackzuschnitt.

Ein gattungsgemäßer Gassackzuschnitt ist ausgebildet zur Herstellung eines Gassackes für eine Insassenschutzeinrichtung, der durch mindestens zwei voneinander getrennte Kammern gebildet wird, die nach dem Aufblasen des Gassackes einen unterschiedlichen Druck aufweisen können. Die beiden Kammern müssen nicht vollständig gasdicht voneinander getrennt sein, sondern sie können durchaus mittels einer oder mehrerer Öffnungen in einer entsprechenden Trennwand miteinander kommunizieren. Diese Öffnungen müssen jedoch in ihrem Querschnitt derart begrenzt sein, dass zumindest für den Zeitraum, in dem der Gassack sein Schutzpotential als Rückhalteeinrichtung für einen Kraftfahrzeuginsassen entfalten soll, in den Kammern ein unterschiedlicher Innendruck aufrechterhalten werden kann.

Solch ein zwei Kammern aufweisender Gassack ist z.B aus der JP 2000052913 bekannt. Der aus JP 2000052913 bekannte Gassack weist zwei Hüllen auf mit einer durch eine Hülle gebildeten Grenzfläche zwischen den durch die zwei Hüllen umschlossenen Kammern.

Die Verwendung von Gassäcken mit mehreren Kammern, die eine unterschiedliche Geometrie und im aufgeblasenen Zustand einen unterschiedlichen Innendruck aufweisen, ist z. B. bei Seitenairbags von Bedeutung, die zum Schutz des Kopfes, des Thorax-Bereiches, des Abdomen-Bereiches sowie des Pelvis-Bereiches eines Fahrzeuginsassen dienen können. Für einen optimalen Schutz dieser unterschiedlichen Körperpartien vor Verletzungen sind jeweils Gassackbereiche unterschiedlicher Geometrie und mit unterschiedlichem Innendruck erforderlich. So sollte beispielsweise eine zum Schutz des Pelvis-Bereiches vorgesehene Kammer des Gassackes einen größeren Innendruck aufweisen als eine zum Schutz des Thorax-Bereiches vorgesehene Kammer.

Der Erfindung liegt das Problem zugrunde, einen Gassackzuschnitt der eingangs genannten Art sowie ein Verfahren zur Herstellung eines Gassackes aus einem derartigen Gassackzuschnitt zu schaffen, die mit möglichst einfachen Mitteln die Herstellung eines Gassackes ermöglichen, dessen Kammern stabil miteinander verbunden sind.

Dieses Problem wird hinsichtlich des Gassackzuschnittes durch die Merkmale des Patentanspruchs 1 gelöst.

Danach weist der Gassackzuschnitt zwei im ausgebreiteten Zustand einander überlappende Gassackteile auf, die insbesondere im Überlappungsbereich miteinander verbindbar sind, so dass der Überlappungsbereich eine Grenzfläche (Trennwand) zwischen zwei Kammern des aufgeblasenen Gassackes ausbildet, der durch Verbinden der Ränder des jeweiligen Gassackzuschnittes herstellbar ist. Mit anderen Worten ausgedrückt, wird jeder der mindestens zwei Gassackzuschnitte einerseits entlang seines äußeren Randes derart vernäht oder in sonstiger Weise verbunden, dass aus dem jeweiligen Gassackzuschnitt eine (offene oder geschlossene) Hülle für eine Kammer des Gassackes gebildet wird; darüber hinaus werden die beiden Gassackteile im Überlappungsbereich zusätzlich derart miteinander verbunden, dass zwischen den beiden Kammern eine Trennwand (Grenzfläche) gebildet wird und sich die beiden Kammern in diesem Bereich stabil aneinander abstützen können.

Die erfindungsgemäße Lösung hat den Vorteil, dass sie in einfacher Weise die Herstellung eines Mehrkammerluftsackes aus einem zweidimensionalen Gassackzuschnitt ermöglicht, wobei auch die Verbindungen zwischen den einzelnen Gassackteilen des Zuschnittes (durch Nähen) am zweidimensional flach ausgebreiteten Gassack bzw. am nach dem Übereinanderlegen von Abschnitten des Gassackzuschnittes wiederum in einer Ebene erstreckten Gassackzuschnitt durchgeführt werden können. Die Trennwand zwischen den beiden Kammern des aus diesem Gassackzuschnitt hergestellten Gassackes wird hierbei in einfacher Weise durch den Überlappungsbereich der beiden Gassackteile definiert. Die Größe des Überlappungsbereiches der beiden Gassackteile sowie der Verlauf der Verbindungsstellen (Verbindungsnähte) zwischen den beiden Gassackteilen bestimmt zudem die Stabilität des Gassackes, insbesondere im Hinblick auf die Vermeidung eins Verkippens der einzelnen Kammern zueinander. Das heißt, die beiden Gassackteile und die im aufgeblasenen Zustand des Gassackes hiervon umschlossenen Kammern können im Überlappungsbereich, in dem die beiden Gassackteile miteinander verbunden sind, stabil zueinander ausgerichtet werden.

Dabei kann die Verbindungslinie, entlang der die beiden Gassackteile im Überlappungsbereich miteinander verbunden sind, im aufgeblasenen Zustand die Grenzfläche zwischen den beiden Kammern des Gassackes ringförmig umschließen.

Die Verbindung der beiden Gassackteile im Überlappungsbereich, insbesondere die die Trennwand (Grenzfläche) zwischen den beiden Kammern ringförmig umschließende Verbindungslinie, kann einerseits durch zusätzliche Verbindungsmittel, z.B. in Form einer Naht oder eines Klebemittels gebildet werden, oder andererseits bzw. ergänzend dadurch, dass in einer Kammer im aufgeblasenen Zustand des Gassackes ein deutlich höherer Druck als in der anderen Kammer herrscht, so dass die eine Kammer entlang der Verbindungslinie gegen die andere Kammer gedrückt wird.

Die durch zusätzliche Verbindungsmittel, z.B. in Form einer Naht, gebildeten Verbindungslinien werden durch entsprechende Verbindung der den Gassackzuschnitt bildenden Gassackteile vor dem Aufblasen des Gassackes geschaffen. Die durch die Unterschiede im Innendruck in den einzelnen Kammern des Gassackes gebildeten Verbindungslinien werden demgegenüber erst beim Aufblasen des Gassackes erzeugt. Die hierfür erforderlichen Druckunterschiede können in bekannter Weise dadurch hergestellt werden, dass eine für die Erzeugung des jeweils gewünschten Innendruckes erforderliche Menge an Druckgas aus dem zum Aufblasen des Gassackes verwendeten Gasgenerators in die entsprechende Kammer des Gassackes eingebracht wird.

Die beiden Teile des Gassackzuschnittes sind vorzugsweise derart ausgebildet und angeordnet, dass im aufgeblasenen Zustand des Gassackes das eine Teil des Gassackzuschnittes glocken- bzw. haubenförmig auf der Hülle der anderen, zweiten Kammer aufliegt, wobei die Hülle der zweiten Kammer, einschließlich der Grenzfläche zwischen den beiden Kammern, durch das andere, zweite Gassackteil gebildet wird.

In einer Ausführungsform weist der Gassackzuschnitt eine Faltachse auf, um die die beiden Gassackteile derart gemeinsam gefaltet (umgeklappt) werden können, dass durch Verbinden der nach dem Falten bzw. Umklappen übereinander liegenden Gassackabschnitte ein Gassack mit zwei voneinander getrennten Kammern gebildet wird. Ein im Überlappungsbereich der beiden Gassackteile liegender Abschnitt (mindestens) eines der beiden Gassackteile bildet hierbei eine Trennwand, durch die die beiden Kammern des Gassackes voneinander getrennt sind. Bei der Faltachse handelt es sich vorzugsweise um eine Symmetrieachse der beiden Gassackteile.

Im Überlappungsbereich der beiden Gassackteile ist das eine Gassackteil vorzugsweise entlang seines äußeren Randes mit dem anderen Gassackteil verbunden, d. h. die Verbindungsstellen des einen Gassackteiles mit dem anderen Gassackteil liegen im Überlappungsbereich derart benachbart zu dem äußeren Rand des einen Gassackteiles, dass keine weiteren Befestigungsstellen zur Verbindung von Abschnitten des Gassackes zwischen den besagten Verbindungsstellen und jenem äußeren Rand liegen.

Die Verbindungsstellen des anderen Gassackteiles im Überlappungsbereich sind demgegenüber vorzugsweise derart von dem äußeren Rand des anderen Gassackteiles beabstandet, dass zwischen diesen Verbindungsstellen und dem äußeren Rand des anderen Gassackteiles noch weitere Befestigungsstellen zur Verbindung von Gassackabschnitten liegen.

Durch die vorbeschriebene Anordnung der Verbindungsstellen zwischen den beiden Gassackteilen im Überlappungsbereich der beiden Gassackteile lässt sich erreichen, dass ein im Überlappungsbereich liegender Abschnitt eines der beiden Gassackteile nach Herstellung des Gassackes die Trennwand bildet, mittels der die beiden Kammern des Gassackes voneinander getrennt sind.

Gemäß einer Ausführungsform der Erfindung ist hierbei das eine Gassackteil mit seinem gesamten im Überlappungsbereich liegenden äußeren Rand mit dem anderen Gassackteil verbunden. Gemäß einer anderen Ausführungsform ist das eine Gassackteil nur entlang eines Teilabschnittes seines im Überlappungsbereich liegenden äußeren Randes, und zwar insbesondere mit einem zentralen Teilabschnitt, mit dem anderen Gassackteil verbunden. Die erstgenannte Variante eignet sich insbesondere zur Schaffung eines Gassackes, bei dem das eine Gassackteil zur Bildung einer ersten Kammer auf das eine zweite Kammer bildende andere Gassackteil aufgesetzt ist, wobei ein Teil der Hülle des die zweite Kammer umschließenden anderen Gassackteiles zugleich auch einen Teil der Hülle der ersten Kammer bildet. Die zweite Variante eignet sich demgegenüber insbesondere zur Schaffung eines Gassackes, bei dem das eine Gassackteil eine erste Kammer umschließt, die als "Sack im Sack" innerhalb der von dem zweiten Gassackteil umschlossenen Kammer liegt, wobei das erste Gassackteil zugleich die Trennwand zwischen denn beiden Kammern bildet.

Je nach gewünschter Geometrie und Anordnung der Kammern des Gassackes können die beiden Gassackteile im Überlappungsbereich nur teilweise überlappen oder es kann eines der beiden Gassackteile vollständig im Überlappungsbereich liegen. An einem der beiden Gassackteile kann zudem eine Aufnahme für einen Gasgenerator, z. B. in Form einer Gewebetasche, befestigt sein.

Nach dem Umklappen bzw. Falten der beiden bereits entlang definierter Verbindungsstellen miteinander verbundenen Gassackteile werden die dann übereinander liegenden Gassackabschnitte ausschließlich entlang ihrer äußeren Ränder, und zwar vorzugsweise entlang des gesamten äußeren Randes, miteinander verbunden, so dass der angestrebte Mehrkammer-Gassack entsteht.

Sowohl die Verbindung der Gassackteile untereinander vor dem Umklappen der Gassackteile bezüglich der Faltachse als auch die spätere Verbindung der übereinander liegenden Gassackabschnitte nach dem Umklappen werden vorzugsweise durch Nähen hergestellt.

Die beiden Kammern des Gassackes können über eine Öffnung in der Trennwand der beiden Kammern miteinander in Verbindung stehen, wobei im Bereich dieser Öffnung zugleich auch der Gasgenerator angeordnet sein kann, so dass je nach den gewünschten Druckverhältnissen in den einzelnen Kammern definierte Gasmengen in die eine und andere Kammer eingelassen werden.

Erfindungsgemäß kann auch eine Mehrzahl an Teilen eines Gassackzuschnittes, insbesondere mehr als zwei Teile, in der erfindungsgemäßen Weise derart miteinander verbunden sein, dass der Gassack im aufgeblasenen Zustand drei oder mehr Kammern aufweist.

Ein Gassack, der in einfacher Weise mittels eines erfindungsgemäßen Gassackzuschnittes hergestellt werden kann, ist durch die Merkmale des Patentanspruchs 34 charakterisiert. Dieser zeichnet sich dadurch aus, dass er aus mindestens zwei Kammern besteht, wobei die Hülle der ersten Kammer auf die Hülle der zweiten Kammer aufgesetzt ist und die Hülle der ersten Kammer in dem Bereich, in dem die beiden Kammern aneinander grenzen, offen ausgebildet ist, so dass dort ausschließlich die Hülle der zweiten Kammer die Trennwand zwischen den beiden Kammern des Gassackes bildet.

Ein Verfahren zur Herstellung eines Gassackes mittels eines erfindungsgemäßen Gassackzuschnittes ist durch die Merkmale des Patentanspruchs 36 charakterisiert. Danach werden die beiden ausgebreiteten und hierbei einander überlappenden Gassackteile im Überlappungsbereich miteinander verbunden, die beiden Gassackteile anschließend z.B. um eine Achse geklappt, so dass die zuvor beidseits der Achse gelegenen Gassackabschnitte nun übereinander liegen, und die übereinander liegenden Gassackabschnitte anschließend (entlang ihres äußeren Randes) miteinander verbunden, so dass ein Gassack mit mindestens zwei Kammern gebildet wird.

Weitere Merkmale und Vorteile der Erfindung werden bei der nachfolgenden Beschreibung von Ausführungsbeispielen anhand der Figuren deutlich werden.

Es zeigen:
- Fig. 1a: eine Schnittdarstellung durch ein erstes Ausführungsbeispiel eines Gassackes mit zwei voneinander getrennten Kammern;
- Fig. 1b: eine Seitenansicht des Gassackes aus Figur 1a;
- Fig. 1c: eine perspektivische Darstellung des Gassackes aus Figur 1a;
- Fig. 2: ein Gassackzuschnitt, bestehend aus zwei in einem Überlappungsbereich miteinander verbundenen Gassackteilen, zur Herstellung eines Gassackes gemäß den Figuren 1a bis 1c;
- Fig. 2a u. 2b: zwei Gewebeteile zur Bildung einer Aufnahme für einen Gasgenerator an dem Gassackzuschnitt gemäß Figur 2;
- Fig. 3a - 3d: vier Schritte bei der Herstellung eines Gassackes gemäß den Figuren 1a bis 1c aus einem Zuschnitt gemäß Figur 2;
- Fig. 4a: ein Schnitt durch ein zweites Ausführungsbeispiel eines Gassackes mit zwei voneinander getrennten Kammern;
- Fig. 4b: eine Seitenansicht des Gassackes aus Figur 4a;
- Fig. 5: ein Gassackzuschnitt, bestehend aus zwei in einem Überlappungsbereich miteinander verbundenen Gassackteilen, zur Herstellung des Gassackes gemäß den Figuren 4a und 4b;
- Fig. 5a u. 5b: zwei Gewebeteile zur Bildung einer Aufnahme für einen Gasgenerator an dem Gassackzuschnitt aus Figur 5;
- Fig. 6a - 6d: vier Schritte bei der Herstellung eines Gassackes gemäß den Figuren 4a und 4b aus einem Gassackzuschnitt gemäß Figur 5;
- Fig. 7a - 7f: vier unterschiedliche Ausführungsformen eines Gassackes mit drei voneinander getrennten Kammern.

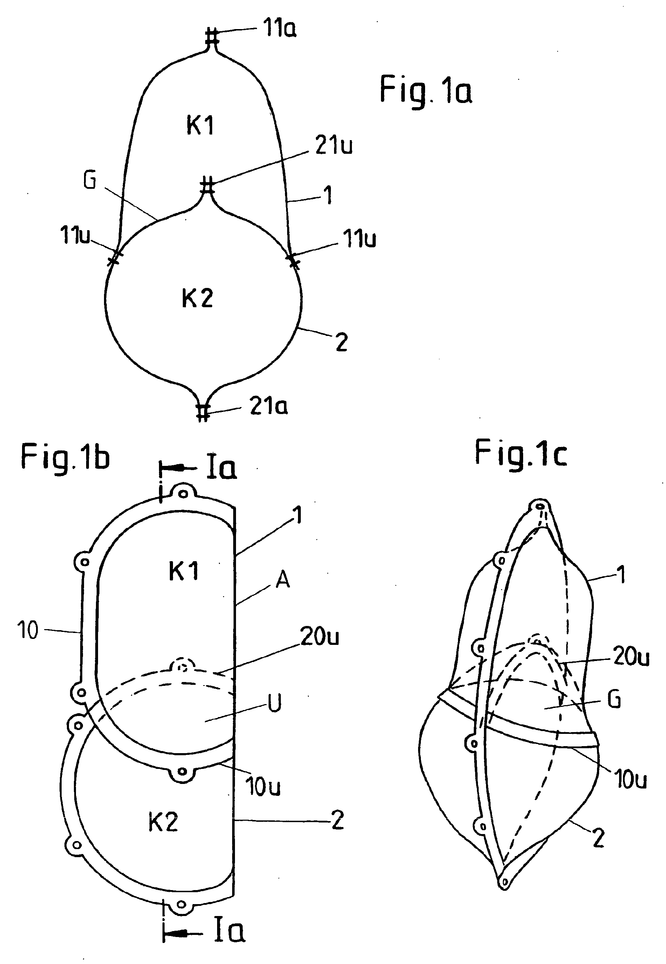

In den Figuren 1a bis 1c ist ein Gassack mit zwei voneinander getrennten Kammern K1, K2 dargestellt, dessen erste Kammer K1 von einer glocken- bzw. haubenförmigen, auf einer Seite (ihrer Unterseite) offenen Gassackhülle 1 umgeben ist und dessen zweite Kammer K2 von einer diese Kammer K2 vollständig umschließenden Gassackhülle 2 umgeben ist. Die Gassackhülle 2 bildet in dem Bereich, in dem die erste Kammer K1 an die zweite Kammer K2 grenzt, eine Trennwand (Grenzfläche G) zwischen den beiden Kammern K1, K2. Somit wird die erste Kammer K1 nicht nur von der zugeordneten Hülle 1 sondern auch von dem die Trennwand bildenden Teil der Hülle 2 der zweiten Kammer K2 nach einer Seite hin begrenzt. In dem Bereich, in dem die Hülle 1 der ersten Kammer K1 auf der Hülle 2 der zweiten Kammer K2 aufliegt, sind die beiden Hüllen 1, 2 miteinander vernäht, so dass die Verbindungsnaht die Trennwand (Grenzfläche G) ringartig umgibt.

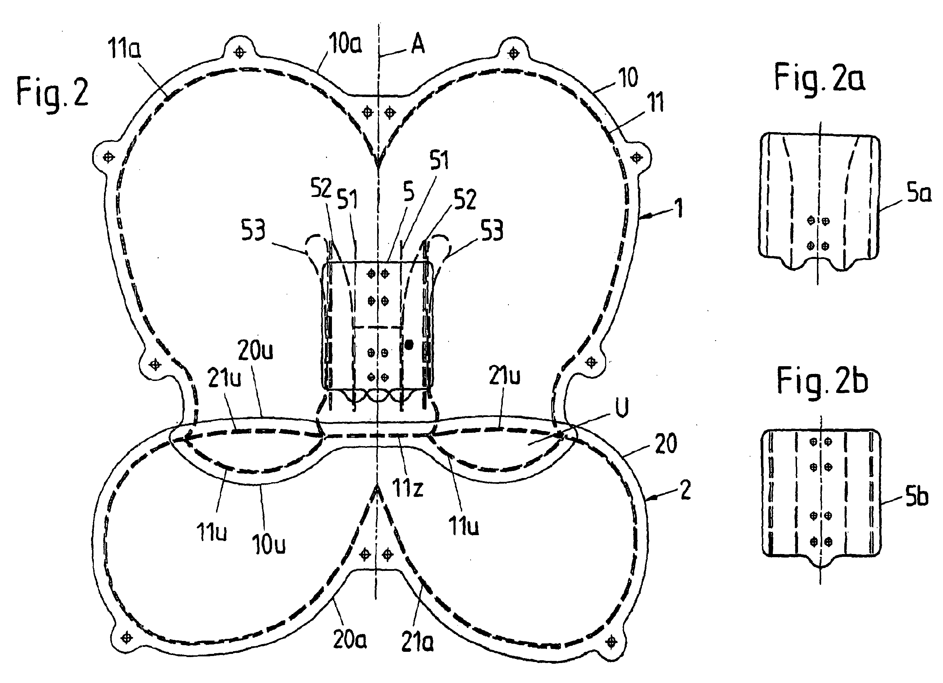

Auf die in den Figuren 1a bis 1c dargestellten Nähte 11a, 11u, 21a, 21u, entlang derer verschiedene Gassackabschnitte miteinander verbunden sind, wird bei der nachfolgenden Beschreibung der Herstellung dieses Gassackes aus den in Figur 2 dargestellten Gassackzuschnitt näher eingegangen werden.

Der in Figur 2 dargestellte Gassackzuschnitt besteht aus einem ersten Gassackteil 1, welches im aufgeblasenen Zustand des Gassackes gemäß den Figuren 1a bis 1c die Hülle der ersten Kammer K1 bildet sowie aus einem zweiten Gassackteil 2, das im aufgeblasenen Zustand des Gassackes die Hülle der zweiten Kammer K2 bildet. Die beiden aus Gewebe bestehenden Gassackteile 1, 2 sind in dem in Figur 2 dargestellten Zustand flach ausgebreitet, wobei sie sich in einem Überlappungsbereich U überlappen und symmetrisch bezüglich einer gemeinsamen Achse A ausgebildet sind. An dem ersten Gassackteil 1 liegen noch zwei weitere Gewebeteile 5a, 5b (vgl. Figuren 2a und 2b) zur Bildung einer Aufnahme 5 für einen Gasgenerator zum Aufblasen des Gassackes, wobei das eine Gewebeteil 5a auf der Vorderseite (Oberseite) des flach auf eine Unterlage ausgebreiteten ersten Gassackteiles 1 liegt und das andere Gewebeteil 5b an der Rückseite (also der der Unterlage zugewandten Seite) des ausgebreiteten ersten Gassackteiles 1 liegt. Diese beiden Gewebeteile 5a, 5b bilden Verstärkungs- und Fügelagen für den aufzunehmenden Gasgenerator.

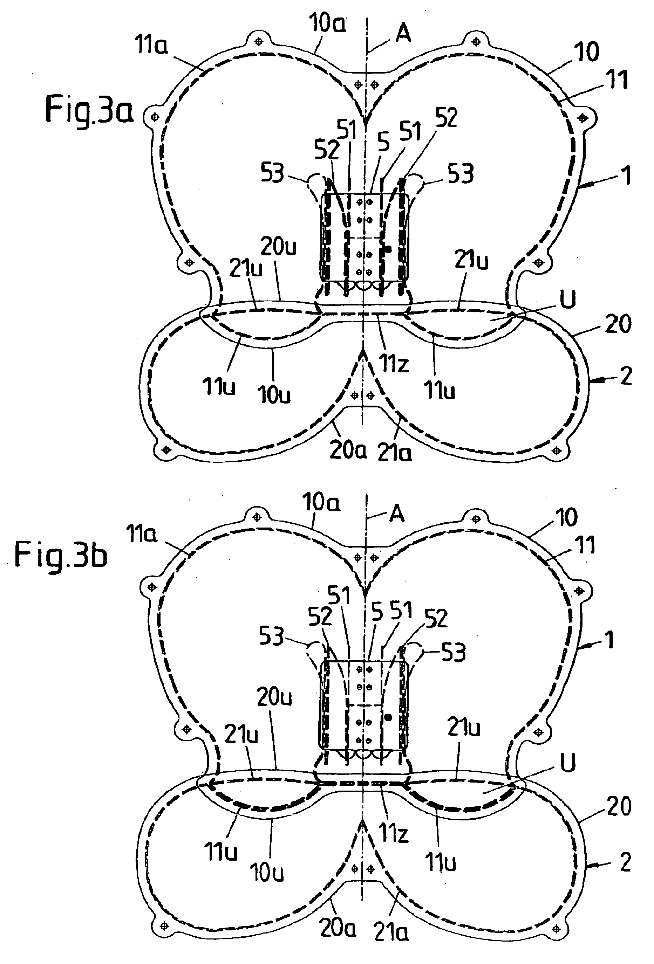

In Figur 2 sind mittels gestrichelter Linien bereits die Verbindungslinien angedeutet, entlang derer Abschnitte des Gassackzuschnittes zur Schaffung eines Gassackes miteinander verbunden werden. Die einzelnen Arbeitsschritte hierzu sind in den Figuren 3a bis 3d dargestellt. Dabei sind in den Figuren 3a bis 3d jeweils die Verbindungslinien (Nähte) hervorgehoben, entlang derer im jeweiligen Arbeitschritt eine Verbindung (durch Nähen) hergestellt wid.

Zur Herstellung des in den Figuren 1a bis 1c dargestellten Gassackes aus dem in Figur 2 gezeigten Gassackzuschnitt wird zunächst das rückseitige, zur Aufnahme eines Gasgenerators dienenden Gewebeteil 5b gemäß Figur 3a entlang zweier längserstreckter, innerer Nähte 51 mit dem ersten Gassackteil 1 verbunden. Anschließend werden beide Gewebeteile 5a, 5b gemeinsam entlang zweier äußerer Längsnähte 52 mit dem ersten Gassackteil 1 verbunden.

Anschließend wird gemäß Figur 3b das erste aus Gewebe bestehenden Gassackteil 1 mit dem zweiten aus Gewebe bestehenden Gassackteil 2 verbunden, in dem das erste Gassackteil 1 entlang desjenigen Abschnittes 10u seines äußeren Randes 10, der im Überlappungsbereich U der beiden Gassackteile 1, 2 liegt, mit dem zweiten Gassackteil vernäht wird. Die Verbindung der beiden Gassackteile 1, 2 im ausgebreiteten Zustand erfolgt somit entlang einer Naht 11u, 11z, die sich im Überlappungsbereich der beiden Gassackteile 1, 2 entlang des im Überlappungsbereich U liegenden Abschnittes 10u des äußeren Randes 10 des ersten Gassackteiles 1 erstreckt. Diese Verbindungsnaht 11u, 11z weist einen zentralen Nahtabschnitt 11z auf, der sich neben der Aufnahme 5 für den Gasgenerator erstreckt, sowie zwei beidseits des zentralen Nahtabschnittes 11z verlaufenden weiteren Nahtabschnitte 11u.

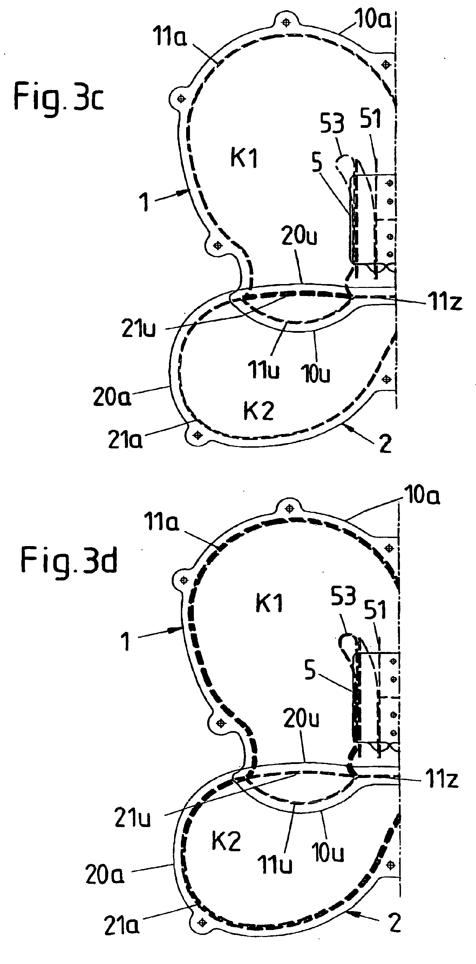

Danach werden die beiden miteinander verbundenen Gassackteile 1, 2 einmal um die Faltachse A geklappt und die zuvor beidseits der Faltachse A gelegenen Gassackabschnitte flach aufeinander gelegt, vgl. Figur 3c. Dann wird zunächst das erste, obere Gassackteil 1 über das zweite, untere Gassackteil 2 gestülpt, so dass die nun im Überlappungsbereich U aufeinander liegenden Teilabschnitte 20ü des äußeren Randes des zweiten Gassackteiles 2 entlang einer Naht 21ü miteinander verbunden werden können, die außerhalb des zentralen Nahtabschnittes 11z liegen, durch den die beiden Gassackteile 1, 2 miteinander verbunden sind. Dadurch dass im Bereich des zentralen Nahtabschnittes 11z keine Verbindung zwischen den beiden übereinander liegenden Abschnitten des zweiten Gassackteiles 2 erfolgt, bildet sich hier eine Öffnung, durch die hindurch die vom ersten Gassackteil 1 umschlossene erste Kammer K1 mit der vom zweiten Gassackteil 2 umschlossene zweite Kammer K2 in Verbindung steht.

Im letzten Arbeitsschritt werden die beiden symmetrisch ausgebildeten Abschnitte des ersten, oberen Gassackteiles 1 wieder aufeinander gelegt (entsprechend Figur 3d) und es werden die übereinander liegenden Abschnitte der beiden Gassackteile 1, 2 entlang der gesamten Außenkontur 10a, 20a der Ränder 10, 20 miteinander vernäht, so dass parallel zu der Außenkontur 10a, 20a entsprechende Nähte 11a, 21a verlaufen. Darüber hinaus wird an der Aufnahme 5 für den Gasgenerator eine Anlagenaht 53 für den Gasgenerator genäht.

Ergebnis der beschriebenen Arbeitsschritte ausgehend von dem in Figur 2 dargestellten Gassackzuschnitt ist ein Gassack, der im aufgeblasenen Zustand die in den Figuren 1a bis 1c dargestellte Gestalt mit zwei Kammern K1, K2 aufweist. Dabei ist die erste Kammer K1 von einem durch das erste Gewebeteil 1 gebildeten, im Wesentlichen glockenförmigen, auf einer Seite offenen Hüllenteil begrenzt und die zweite Kammer K2 von einem diese vollständig umgebenden Hüllenteil 2, wobei die zweite Hülle 2 zugleich eine Trennwand zwischen den beiden Kammern K1, K2 bildet.

Dadurch dass sich die beiden Hüllen 1, 2 des Gassackes im Bereich ihrer Verbindungsnaht 11u, die entlang des unteren Randes 10u des ersten Gassackteiles 1 die eine Grenzfläche G bildende Trennwand ringförmig umgibt, aneinander abstützen, weist diese Luftsackanordnung eine hohe Stabilität auf, insbesondere im Hinblick auf ein nicht erwünschtes Umklappen der einen Kammer bezüglich der anderen Kammer. Im Ergebnis wird die Hülle 1 der ersten, oberen Kammer 1 hinreichend steif an die Hülle 2 der zweiten, unteren Kammer K2 gekoppelt, so dass die erste Kammer K1 sicher in ihrer Position gehalten wird. Die Form und Größe der beiden Kammern K1, K2 ist im Wesentlichen unabhängig voneinander; es ist lediglich erforderlich, dass die Hülle 2 der zweiten Kammer K2 eine Trennwand zwischen den beiden Kammern K1, K2 bildet, um die erste Kammer K1 auf derjenigen Seite zu begrenzen, auf der deren Hülle 1 offen ist. Die Hülle 2 der zweiten Kammer K2 ergänzt somit die an einer Seite offene Hülle 1 der ersten Kammer K1, so dass auch die erste Kammer K1 von der zugeordneten Hülle 1 und einem Teil der weiteren Hülle 2 vollständig umschlossen ist.

Alternativ zu den Arbeitsschritten gemäß den Figuren 3c und 3d kann der in Figur 3b dargestellte Gassackzuschnitt auch entlang der Achse A durchgeschnitten werden (als Alternative zum Falten um die Achse A). Die beiden hierbei entstehenden Gassackplatten müssten dann entlang des gesamten äußeren Randes vernäht werden, also auch an der Kante, entlang derer sie gemäß den Figuren 3c und 3d einstückig miteinander verbunden waren.

Von den beiden zur Aufnahme des Gasgenerators vorgesehenen Gewebeteilen 5a, 5b befindet sich das eine Gewebeteil 5a innerhalb und das andere Gewebeteil 5b außerhalb des Gassackes. Durch Schlitze in der Hülle 1 der ersten Kammer K1 und des anderen Gewebeteiles 5b kann dabei der Gasgenerator, der sich mit seinen Anschlüssen außerhalb des Gassackes befindet, in das Innere des Gassackes ragen.

Ein Gassack der in den Figuren 1a bis 1c dargestellten Art eignet sich insbesondere zur Verwendung als Seitenairbag, wobei die zweite, untere Kammer K2 in einem Crash-Fall mit einem größeren Innendruck befüllt wird als die erste, obere Kammer K1. Die untere Kammer K2 kann insbesondere zum Abstützen des Pelvis-Bereiches eines Fahrzeuginsassen dienen, während die erste, obere Kammer in ihrer unteren Hälfte dem Abdomen-Bereich und in ihrer oberen Hälfte dem Thorax-Bereich des Insassen zugeordnet ist. Zum Schutz des Kopfbereiches eines Fahrzeuginsassen kann beispielsweise die erste Kammer K1 nach oben hin entsprechend größer ausgeführt sein, oder es ist eine weitere, dritte Hülle oberhalb der ersten Kammer vorgesehen, die eine weitere Kammer als Kopfschutz bildet. Diese weitere Hülle kann in entsprechender Weise auf die darunter liegende Hülle 1 aufgesetzt sein, wie diese Hülle 1 auf die wiederum darunter liegende Hülle 2 aufgesetzt und mit dieser verbunden ist.

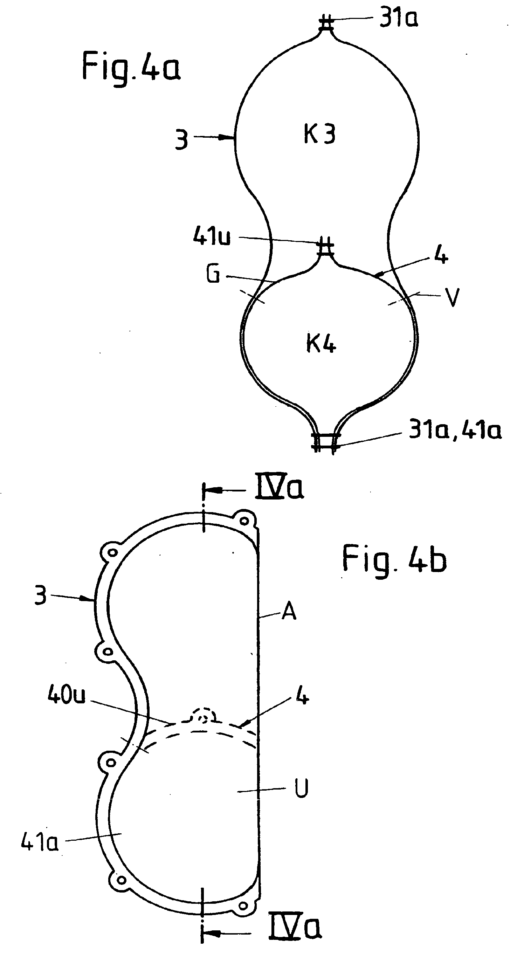

In den Figuren 4a und 4b ist eine Abwandlung des Gassackes aus den Figuren 1a bis 1c dargestellt, wobei zur Bildung eines Seitenairbags eine von einer Hülle 4 vollständig umgebene Kammer K4 innerhalb einer von einer weiteren Hülle 3 vollständig umgebenen Kammer K3 angeordnet ist. Die eine Kammer K4 liegt dabei mit ihrer Hülle 4 vollständig innerhalb des von der anderen Hülle 3 umgebenen Bereiches, der die andere Kammer K3 definiert. Die Trennung der beiden Kammern K3, K4 erfolgt durch die Hülle 4 der einen, inneren Kammer K4.

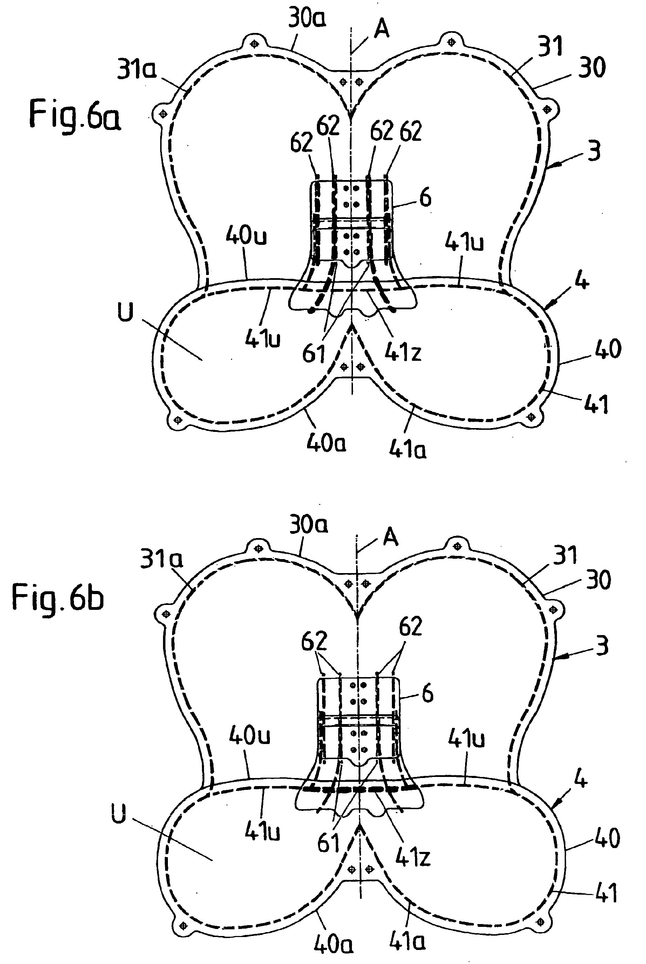

Auch bei diesem Ausführungsbeispiel umgibt eine Hülle 3 eine zugeordnete Kammer K3 glockenförmig und ist im Überlappungsbereich der beiden Hüllen 3, 4 derart mit der zweiten Hülle 4 verbunden, dass die Verbindungslinie die Trennwand (Grenzfläche G) zwischen den beiden Kammern K3, K4 ringförmig umgibt. Dabei wird die entsprechende Verbindungslinie nur zu einem Teil durch eine Verbindungsnaht 41z (vergleiche Figur 6b) gebildet und zu einem überwiegenden Teil durch eine Verbindungslinie V, entlang der die die Grenzfläche G bildende Kammer K4 gegen die Hülle 3 der hauben- bzw. glockenförmigen Kammer K3 gedrückt wird. Hierzu ist der Innendruck in der die Grenzfläche G bildenden und von ihrer Hülle 4 vollständig umschlossenen Kammer K4 deutlich größer als der Innendruck in der glocken- bzw. haubenförmigen Kammer K3.

Bei dem in den Figuren 4a und 4b dargestellten Gassack dient bei einer Verwendung als Seitenairbag die eine, untere Kammer K4 zum Schutz des Pelvis-Bereiches eines Fahrzeuginsassen und die andere Kammer K3 zum Schutz des Thorax- und Abdomen-Bereiches eines Fahrzeuginsassen. Selbstverständlich kann aber auch hier, wie bei dem vorherigen Ausführungsbeispiel, der Kopfbereich mit einbezogen werden.

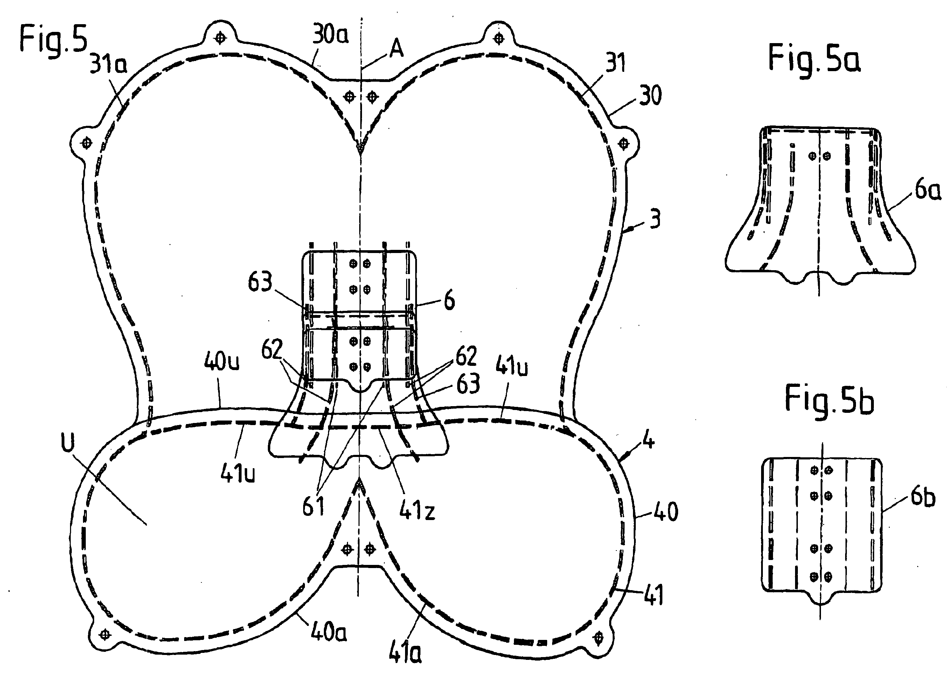

Der in den Figuren 4a und 4b dargestellte Gassack kann aus einem in Figur 5 gezeigten Gassackzuschnitt mittels der in den Figuren 6a bis 6d dargestellten Verfahrensschritte hergestellt werden.

Der in Figur 5 dargestellte Gassackzuschnitt besteht aus zwei Gassackteilen 3, 4, die symmetrisch bezüglich einer Achse A ausgebildet sind und die derart übereinander liegen, dass das eine Gassackteil 4 vollständig auf dem anderen Gassackteil 3 aufliegt. Mit anderen Worten ausgedrückt, überlappt das eine Gassackteil 4 mit einem Teilbereich des anderen Gassackteiles 3, wobei jedoch das erstgenannte Gassackteil 4 vollständig im Überlappungsbereich der beiden Gassackteile 3, 4 liegt. Das andere Gassackteil 3 ist demnach im Überlappungsbereich U identisch ausgebildet wie das eine Gassackteil 4. An dem anderen Gassackteil 3 liegen zwei Gewebeteile 6a, 6b, die eine Aufnahme 6 für einen Gasgenerator zum Aufblasen des entsprechenden Gassackes bilden sollen, wobei ein Gewebeteil 6a auf der Vorderseite und das andere auf der Rückseite des Gassackteiles 3 angeordnet ist.

In einem ersten Arbeitsschritt wird entsprechend Figur 6a das rückseitige Gewebeteil 6b der beiden Gewebeteile 6a, 6b, die als Verstärkungs- und Fügelagen zur Aufnahme des Gasgenerators dienen, entlang innerer Längsnähte 61 mit dem zugeordneten Gassackteil verbunden. Anschließend werden beide Gewebeteile 6a, 6b gemeinsam entlang zweier äußerer Längsnähte 62 mit dem Gassackteil verbunden.

Im zweiten Schritt wird gemäß Figur 6b das eine, untere Gassackteil 4 entlang eines Teilabschnittes seines äußeren Randes 40 mit dem anderen Gassackteil 3 verbunden. Dieser Teilabschnitt bildet den zentralen Abschnitt desjenigen Randbereiches 40u des einen Gassackteiles 4, der außerhalb des Randes des anderen Gassackteiles 3 an diesem anliegt. Die hierbei entstehende Verbindungsnaht 41z erstreckt sich genau entlang desjenigen Teiles des Randbereiches 40u, der von den Gewebeteilen 6a, 6b der Aufnahme 6 für einen Gasgenerator überdeckt wird. Hierdurch sind die beiden Gassackteile 3, 4 entlang einer Naht 41z miteinander verbunden, die sich entlang eines Teiles desjenigen Randbereiches 40u des einen Gassackteiles 4 erstreckt, der das andere Gassackteil 3 kreuzt.

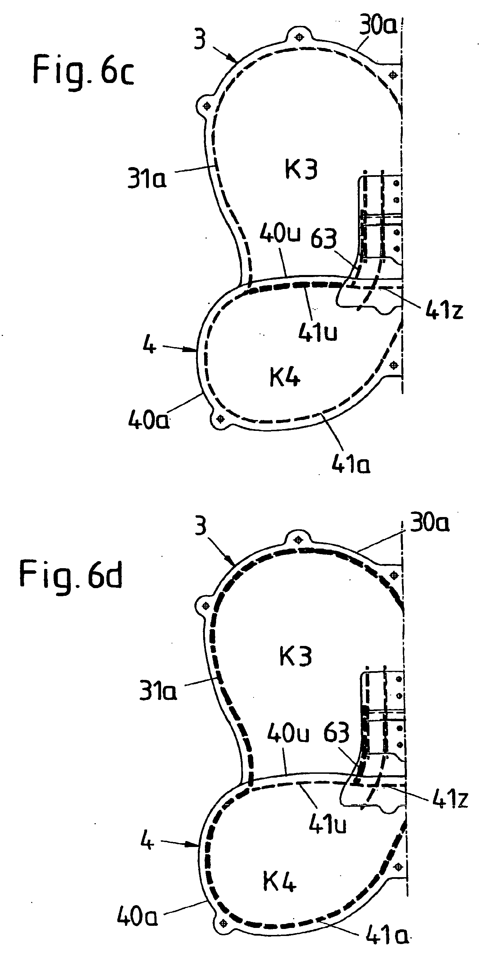

Im darauf folgenden Schritt werden die beidseits der Faltachse A gelegenen Abschnitte der beiden Gewebeteile 3, 4 um die Faltachse A zusammengefaltet und aufeinander gelegt, vgl. Figur 6c. Ferner wird der hierbei durch das andere Gassackteil 3 gebildete obere Gewebeflügel weggeklappt, so dass die beiden aufeinander liegenden Abschnitte des einen Gassackteiles 4 nun durch Bildung einer Naht 41u miteinander verbunden werden, die im Überlappungsbereich der beiden Gassackteile 3, 4 an die zentrale Naht 41z anschließt. Im Bereich der zentralen Naht 41z, entlang derer die beiden Gassackteile 3, 4 miteinander verbunden sind, nicht aber die beiden gemäß Figur 6c übereinander liegenden Abschnitte des einen Gassackteiles 4, verbleibt somit eine Öffnung, durch die hindurch sich die Aufnahme 6 für den Gasgenerator erstreckt, so dass aus einem dort aufgenommenen Gasgenerator heraus Gas in beide Kammern K3, K4 des Gassackes eingeleitet werden kann.

Im letzten Arbeitsschritt werden die aufeinander liegenden Gassackabschnitte nun entlang derjenigen Teilabschnitte 30a, 40a der Ränder 30, 40 der beiden Gassackteile 3, 4 vernäht, die die Außenkontur des Gassackes insgesamt bilden. Hierdurch entstehen entsprechende, entlang der Außenkontur verlaufende Nähte 31a, 41a, vergl. Figur 6d.

Ferner wird an der Aufnahme 6 eine zusätzliche Naht 63 als Anlage für den Gasgenerator genäht.

Die innere, sowohl von der einen Hülle 4 als auch von der anderen, äußeren Hülle 3 umgebene Kammer K4 ist demnach überwiegend doppelwandig ausgeführt, so dass sie als besonders stabile Kammer mit einem vergleichsweise großen Innendruck aufgeblasen werden kann, der zum Schutz des Pelvis-Bereiches eines Fahrzeuginsassen vorteilhaft ist. Die andere, einwandige Kammer K3 ist demgegenüber durch einen geringeren Innendruck entlastet.

Der in den Figuren 4a und 4b dargestellte Gassack zeichnet sich gegenüber dem in den Figuren 1a bis 1c dargestellten durch eine einfachere Herstellung aus, da das Umstülpen eines Gewebeteiles entfällt, welches beim ersten Ausführungsbeispiel erforderlich ist, um einen inneren Nahtbereich zugänglich zu machen.

In beiden Fällen ist vorteilhaft, dass die Herstellung unter Verwendung eines ausgebreiteten, zweidimensionalen Gassackzuschnittes erfolgt, wobei die jeweils zu verbindenden Gassackbereiche flach übereinander liegen.

Bei dem in den Figuren 4a und 4b dargestellten Gassack muss sich die innere Hülle 4 der einen Kammer K4 sich nicht zwangsweise bis zum unteren Ende des Gassackes insgesamt erstrecken. Vielmehr kann die innere Hülle 4 auch als eine die zugeordnete Kammer K4 nur teilweise umgebende Hülle ausgebildet sein, die im Wesentlichen als Trennwand zwischen den beiden Kammern K3, K4 dient. Die entsprechende Naht 41a, über die diese Hülle 4 mit der anderen Hülle 3 zu vernähen wäre, wäre dann entsprechend nach oben versetzt. Die eine Kammer K4 wäre dann auch nur im Wesentlichen einwandig ausgebildet, was bei einem hinreichend kleinen erforderlichen Innendruck ausreichend ist und zu Materialersparnis führt.

Bei den in den Figuren 1a bis 1c bzw. 4a und 4b dargestellten Gassackanordnungen ist im aufgeblasenen Zustand des Gassackes jeweils der Innendruck in der glocken- bzw. haubenförmigen Kammer K1 oder K3 deutlich geringer als in der anderen, die jeweilige Grenzfläche G bildenden Kammer K2 bzw. K4. Aufgrund des deutlich größeren Innendruckes in der jeweils die Grenzfläche G bildenden Kammer K2 bzw. K4 wird diese mit ihrer Außenwand gegen die Innenwand der jeweiligen glockenförmigen Kammer K1 bzw. K3 gedrückt.

Bei dem in den Figuren 1a bis 1c dargestellten Ausführungsbeispiel wirkt dabei der deutlich größere Innendruck in der unteren Kammer K2 ergänzend zu der Verbindungsnaht 11u, um die beiden Gassackteile 1, 2 entlang einer die Grenzfläche G umschließenden Verbindungslinie miteinander zu verbinden und stabil aneinander abzustützen. Bei dem in den Figuren 4a und 4b dargestellten Ausführungsbeispiel ist demgegenüber keine die Grenzfläche G vollständig umschließende Verbindungsnaht vorgesehen, so dass hier die die Grenzfläche G umschließende Verbindungslinie V zwischen den Hüllen 3, 4 der beiden Kammern K3, K4 abschnittsweise alleine durch den entsprechend großen Innendruck der unteren Kammer K4 bewirkt wird, durch den diese gegen die Innenwand der glockenförmigen äußeren Kammer K3 gedrückt wird. Der entsprechende Druckunterschied bewirkt vor allem deshalb ein festes Anliegen der Hülle 4 der inneren Kammer K4 an der Hülle 3 der äußeren Kammer K3, da im Überlappungsbereich U die Gassackzuschnitte der beiden die Hülle bildenden Gassackteile kongruent (insbesondere flächengleich) sind, vergleiche Figur 5 sowie Figuren 6a und 6b.

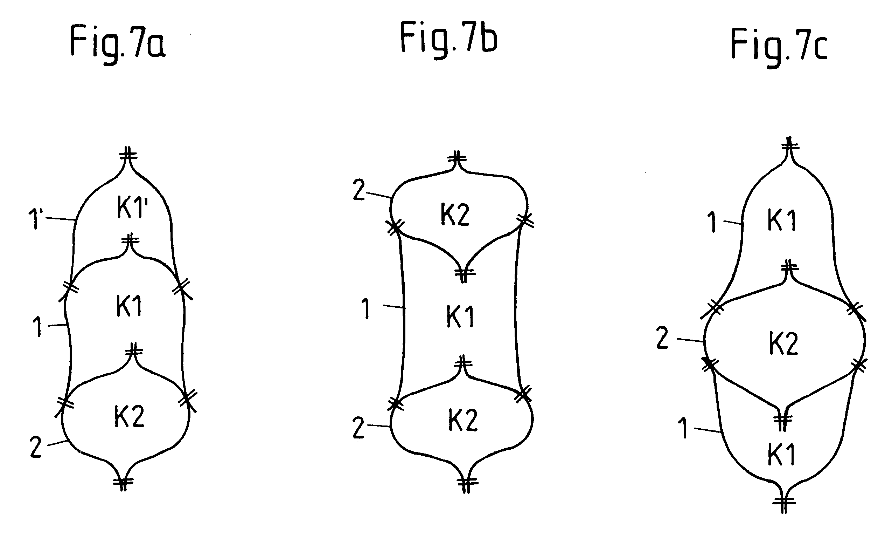

In den Figuren 7a bis 7f sind unterschiedliche Ausführungsbeispiele einer Gassackanordnung mit insgesamt drei Gassackteilen und dementsprechend drei voneinander getrennten Kammern dargestellt.

Figur 7a zeigt eine Weiterbildung der Gassackanordnung aus den Figuren 1a bis 3d, wobei durch ein zusätzliches Gassackteil 1' oberhalb der glockenförmigen Kammer K1 eine weitere glockenförmige Kammer K1' gebildet ist. Die beiden glockenförmigen Kammern K1', K1 sind dabei in gleicher Weise durch Nähte verbunden, wie die eine glockenförmige Kammer K1 mit der durch das zugeordnete Gassackteil 2 vollständig umschlossenen Kammer K2.

Figur 7b zeigt eine weitere Abwandlung der Gassackanordnung aus den Figuren 1a bis 3d, wobei der Unterschied darin besteht, dass die der einen vollständig geschlossenen Kammer K2 abgewandte Seite der glockenförmigen Kammer K1 durch eine weitere, separate, von ihrem zugeordneten Gassackteil 2 als Hülle vollständig umschlossene Kammer K2 gebildet wird.

Bei dem Ausführungsbeispiel gemäß Figur 7c ist auf einander gegenüberliegenden Seiten einer durch ihr zugeordnetes Gassackteil 2 als Hülle vollständig umschlossenen Kammer K2 jeweils eine glockenförmige Kammer K1 angeordnet und dort mittels jeweils einer, die entsprechende Grenzfläche umschließenden Naht befestigt.

Bei den in den Figuren 7a bis 7c dargestellten Gassackanordnungen ist der Innendruck in den von ihrem zugeordneten Gassackteil 2 als Hülle vollständig umschlossenen Kammern K2 jeweils deutlich größer als in den von einer glockenförmigen Hülle 1 begrenzten Kammern K1. Bei dem Ausführungsbeispiel gemäß Figur 7a ist außerdem der Druck in der der von ihrer Hülle 2 vollständig umschlossenen Kammer K2 beabstandeten haubenförmigen Kammer K1' kleiner als der Innendruck in der mittleren Kammer K1.

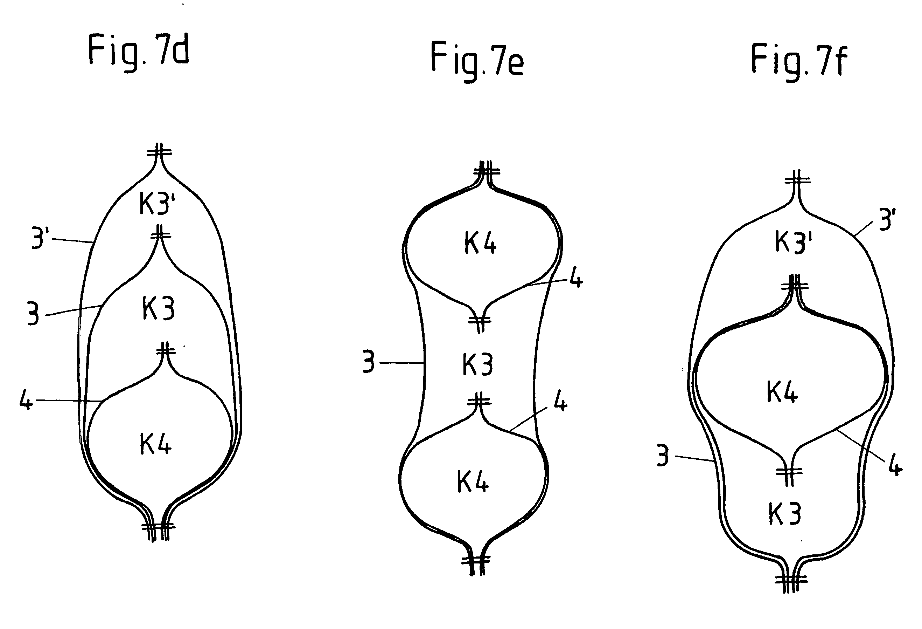

Die Figuren 7d und 7f zeigen jeweils eine Abwandlung der Gassackanordnung aus den Figuren 4a bis 6d, wobei jeweils die glockenförmige, mit ihrer äußeren Hülle 3 eine innere Kammer K4 umschließende Kammer K3 von der Hülle einer weiteren, äußersten glockenförmigen Kammer K3' umgeben ist, deren Hülle durch ein zusätzliches Gassackteil 3' gebildet wird.

Bei dem in Figur 7e gezeigten Ausführungsbeispiel sind in einer äußeren Kammer K3 die durch jeweils ein Gassackteil 4 gebildeten Hüllen zweier weiterer innerer Kammern K4 angeordnet.

Bei den in den Figuren 7d bis 7f dargestellten Gassackanordnungen ist jeweils der Innendruck in der von ihrer zugeordneten Hülle vollständig umschlossenen Kammer K4 deutlich größer als in der zugeordneten glockenförmigen Kammer K3. Deren Innendruck ist wiederum bei den Ausführungsbeispielen gemäß den Figuren 7d und 7f deutlich größer als der Druck der durch die äußerste Hülle 3' gebildeten Kammer K3'.

## Patentansprüche

1. Mehrteiliger Gassackzuschnitt für einen Gassack einer Insassenschutzeinrichtung für Kraftfahrzeuge, der durch Verbinden der Ränder (10, 20; 30, 40) des Gassackzuschnittes herstellbar ist, mit mindestens zwei einander überlappenden Gassackteilen (1, 2; 3, 4), die im Überlappungsbereich (U) miteinander verbunden sind, wobei im aufgeblasenen Zustand des Gassackes ein Gassackteil (1, 3) eine Hülle bildet, die eine Kammer (K1, K3) des Gassackes glockenförmig umgibt, und ein anderes Gassackteil (2, 4) eine Hülle bildet, die eine weitere Kammer (K2, K4) des Gassackes umschließt und im Überlappungsbereich (U) eine Grenzfläche zwischen zwei Kammern (K1, K2; K3, K4) des Gassackes ausbildet, in deren Bereich sich die beiden Hüllen des aufgeblasenen Gassackes zur Stabilisierung des Gassackes aneinander abstützen.

2. Gassackzuschnitt nach Anspruch 1, **gekennzeichnet durch** eine derartige Ausbildung und Verbindung der einander überlappenden Gassackteile (1, 2; 3, 4), dass im aufgeblasenen Zustand des Gassackes das eine Gassackteil (1, 3) die erste Kammer (K1. K3) glocken-/haubenförmig umgibt.

3. Gassackzuschnitt nach Anspruch 1 oder 2, **dadurch gekennzeichnet, dass** die Grenzfläche (G) zwischen den beiden Kammern (K1, K2; K3, K4) durch das zweite Gassackteil (2, 4) gebildet wird, welches im aufgeblasenen Zustand die zweite Kammer (K2, K4) des Gassackes umgibt.

4. Gassackzuschnitt nach einem der vorhergehenden Ansprüche, **dadurch gekennzeichnet, dass** sich die beiden Gassackteile (1, 2; 3, 4) im aufgeblasenen Zustand des Gassackes im Überlappungsbereich (U) aneinander abstützen.

5. Gassackzuschnitt nach einem der vorhergehenden Ansprüche, **dadurch gekennzeichnet, dass** die beiden Gassackteile (1, 2; 3, 4) im Überlappungsbereich (U) derart miteinander verbindbar sind, dass eine die Grenzfläche (G) des Gassackes im aufgeblasenen Zustand ringartig umgebende Verbindungslinie (11u, 11z; 41z, V) gebildet wird, wobei eine Verbindungslinie (11u, 11z; 41z) durch zusätzliche Verbindungsmittel, z.B. in Form einer Naht oder eines Klebemittels, gebildet werden kann und/oder eine Verbindungslinie (V) **dadurch** gebildet werden kann, dass das eine Gassackteil (2, 4) im aufgeblasenen Zustand des Gassackes aufgrund des Innendruckes in der zugeordneten Kammer (K2, K4) zumindest entlang der Verbindungslinie gegen das andere Gassackteil (1, 3) gedrückt wird, welches die Hülle für eine zugeordnete Kammer (K1, K3) bildet.

6. Gassackzuschnitt nach einem der vorhergehenden Ansprüche, **gekennzeichnet durch** eine Faltachse (A), um die die beiden Gassackteile (1, 2; 3, 4) derart gefaltet werden können, dass **durch** Verbinden der nach dem Falten übereinander liegenden Gassackabschnitte ein Gassack mit zwei Kammern (K1, K2; K3, K4) gebildet wird.

7. Gassackzuschnitt nach Anspruch 6, **dadurch gekennzeichnet, dass** die Faltachse (A) eine Symmetrieachse bezüglich des Gassackzuschnittes bildet, wobei vorzugsweise beide Gassackteile (1, 2; 3, 4) symmetrisch bezüglich der Faltachse (A) ausgebildet sind.

8. Gassackzuschnitt nach einem der vorhergehenden Ansprüche, **dadurch gekennzeichnet, dass** im Überlappungsbereich (U) der beiden Gassackteile (1,2; 3,4) das eine Gassackteil (1, 4) entlang eines Teiles (10u, 40u) seines äußeren Randes (10u) mit dem anderen Gassackteil (2, 3) verbunden ist.

9. Gassackzuschnitt nach Anspruch 8, **dadurch gekennzeichnet, dass** die linienartigen Verbindungsstellen (11u, 11z; 41z) des einen Gassackteiles (1, 4) mit dem anderen Gassackteil (2, 3) im Überlappungsbereich (U) so dicht bei dem äußeren Rand (10, 40) des einen Gassackteiles (1, 4) liegen, dass keine weiteren Befestigungsstellen zwischen den Verbindungsstellen (11u, 11z; 41z) und dem entsprechenden Bereich (10u, 40u) des äußeren Randes (10, 40) liegen.

10. Gassackzuschnitt nach einem der vorhergehenden Ansprüche, **dadurch gekennzeichnet, dass** im Überlappungsbereich (U) das eine Gassackteil (1, 4) mit dem anderen Gassackteil (2, 3) in einem Bereich des anderen Gassackteiles (2, 3) verbunden ist, der außerhalb des Randbereiches (20, 30) des anderen Gassackteiles liegt.

11. Gassackzuschnitt nach Anspruch 10, **dadurch gekennzeichnet, dass** zwischen den Verbindungsstellen (11u, 11z; 41z) des anderen Gassackteiles (2, 3) mit dem einen Gassackteil (1, 4) und dem äußeren Rand (20, 30) des anderen Gassackteiles (2, 3) noch weitere Befestigungsstellen (11a, 21a; 31a, 41a) zur Verbindung von Gassackabschnitten liegen.

12. Gassackzuschnitt nach einem der vorhergehenden Ansprüche, **dadurch gekennzeichnet, dass** das eine Gassackteil (1) entlang seines gesamten im Überlappungsbereich (U) liegenden Abschnittes (10u) des äußeren Randes (10) mit dem anderen Gassackteil (2) verbunden ist.

13. Gassackzuschnitt nach einem der Ansprüche 8 bis 11, **dadurch gekennzeichnet, dass** das eine Gassackteil (4) nur entlang eines Teilabschnittes seines im Überlappungsbereich (U) liegenden Abschnittes (40u) des äußeren Randes (40) mit dem anderen Gassackteil (3) verbunden ist.

14. Gassackzuschnitt nach Anspruch 13, **dadurch gekennzeichnet, dass** das eine Gassackteil (4) nur entlang eines zentralen Teilabschnittes seines im Überlappungsbereich (U) liegenden Teilabschnittes (40u) des äußeren Randes (40) mit dem anderen Gassackteil (3) verbunden ist.

15. Gassackzuschnitt nach einem der vorhergehenden Ansprüche, **dadurch gekennzeichnet, dass** die beiden Gassackteile (1, 2) nur teilweise mit dem jeweils anderen Gassackteil (2, 1) überlappen.

16. Gassackzuschnitt nach einem der Ansprüche 1 bis 14, **dadurch gekennzeichnet, dass** ein Gassackteil (4) vollständig mit dem anderen Gassackteil (3) überlappt.

17. Gassackzuschnitt nach einem der vorhergehenden Ansprüche, **dadurch gekennzeichnet, dass** eine Aufnahme (5, 6) für einen Gasgenerator an mindestens einem der Gassackteile (1, 3) festgelegt ist.

18. Gassackzuschnitt nach Anspruch 13 oder 14 und Anspruch 17, **dadurch gekennzeichnet, dass** der Teilabschnitt des äußeren Randes (10, 40) des einen Gassackes (1, 4) im Überlappungsbereich der Aufnahme (5, 6) mit dem äußeren Rand (10, 40) liegt.

19. Gassackzuschnitt nach einem der vorhergehenden Ansprüche, **dadurch gekennzeichnet, dass** die nach dem Umklappen des Gassackzuschnittes um die Faltachse (A) übereinander liegenden Gassackabschnitte nur entlang der äußeren Ränder (10a, 20a; 30a, 40a) der Gassackteile (1, 2; 3, 4) miteinander verbunden werden, die die äußere Kontur des gesamten Gassackes bilden.

20. Gassackzuschnitt nach Anspruch 19, **dadurch gekennzeichnet, dass** die übereinander liegenden Gassackabschnitte entlang der gesamten äußeren Kontur des Gassackes miteinander verbunden werden.

21. Gassackzuschnitt nach einem der vorhergehenden Ansprüche, **dadurch gekennzeichnet, dass** die Verbindungen jeweils durch Nähte gebildet sind.

22. Gassackzuschnitt nach einem der vorhergehenden Ansprüche, **dadurch gekennzeichnet, dass** die beiden Gassackteile (1, 2; 3, 4) jeweils einer Kammer (K1, K2; K3, K4) des Gassackes als Hülle zugeordnet sind.

23. Gassackzuschnitt nach einem der vorhergehenden Ansprüche, **dadurch gekennzeichnet, dass** ein Gassackteil (2, 4) zum vollständigen Umschließen einer Kammer (K2, K4) des Gassackes dient.

24. Gassackzuschnitt nach Anspruch 23, **dadurch gekennzeichnet, dass** ein Gassackteil (1) eine Kammer (K1) des Gassackes nur teilweise umschließt und derart mit dem anderen Gassackteil (2) verbunden ist, dass das andere Gassackteil (2) zusammen mit dem einen Gassackteil 1 die eine Kammer (K1) vollständig umschließt.

25. Gassackzuschnitt nach Anspruch 24, **dadurch gekennzeichnet, dass** das eine Gassackteil (1) eine offene Seitenfläche aufweist, entlang deren Rand es derart mit dem anderen Gassackteil (2) verbunden ist, dass das andere Gassackteil (2) zusammen mit dem einen Gassackteil (1) die eine Kammer (K1) vollständig umschließt.

26. Gassackzuschnitt nach einem der vorhergehenden Ansprüche, **dadurch gekennzeichnet, dass** ein Gassackteil (4) vollständig von dem anderen Gassackteil (3) umschlossen wird.

27. Gassackzuschnitt nach Anspruch 26, **dadurch gekennzeichnet, dass** eine Kammer (K4) des Gassackes von dem einen Gassackteil (4) vollständig umschlossen wird und die andere Kammer (3) des Gassackes von dem anderen Gassackteil (3) umschlossen wird, wobei ein Teil des einen Gassackteiles (4) zusätzlich die andere Kammer (K3) begrenzt.

28. Gassackzuschnitt nach einem der vorhergehenden Ansprüche, **dadurch gekennzeichnet, dass** beide Kammern (K1, K2; K3, K4) durch einen Abschnitt genau eines Gassackteiles (2; 4) voneinander getrennt sind.

29. Gassackzuschnitt nach einem der vorhergehenden Ansprüche, **dadurch gekennzeichnet, dass** beide Kammern (1, 2; 3, 4) des Gassackes durch eine Öffnung in der Trennwand zwischen den beiden Kammern (K1, K2; K3, K4) miteinander verbunden sind.

30. Gassackzuschnitt nach Anspruch 29, **dadurch gekennzeichnet, dass** der Gasgenerator im Bereich der Öffnung anzuordnen ist.

31. Gassackzuschnitt nach Anspruch 30, **dadurch gekennzeichnet, dass** der Gasgenerator die Öffnung teilweise durchgreift.

32. Gassackzuschnitt nach einem der vorhergehenden Ansprüche, **dadurch gekennzeichnet, dass** der Gassackzuschnitt vorgesehen und ausgebildet ist für einen Gassack eines Seitenairbagmodules.

33. Gassackzuschnitt nach einem der vorhergehenden Ansprüche, **dadurch gekennzeichnet, dass** unterschiedliche Kammern (1, 2; 3, 4) des Gassackes zum Schutz unterschiedlicher Bereiche des Körpers, insbesondere des Oberkörpers, eines Insassen vorgesehen sind.

34. Gassack für eine lnsassenschutzeinrichtung für Kraftfahrzeuge mit mindestens zwei Kammern (K1, K2; K3, K4), die durch eine Trennwand voneinander getrennt sind, wobei eine durch ein Gassackteil (2, 4) gebildete Gassackhülle die eine Kammer (K2, K4) vollständig umschließt und eine Grenzfläche zwischen den beiden Kammern (K1, K2; K3, K4) ausbildet und eine durch ein weiteres Gassackteil (1, 3) gebildete Gassackhülle eine Kammer (K1, K3) glockenförmig umgibt und wobei sich die Hüllen der beiden Kammern (K1, K2; K3, K4) des aufgeblasenen Gassackes im Bereich der Trennwand zur Stabilisierung des Gassackes aneinander abstützen.

35. Gassack nach Anspruch 34 mit den kennzeichnenden Merkmalen mindestens eines der Ansprüche 1 bis 33.

36. Verfahren zur Herstellung eines Gassackes aus einem Gassackzuschnitt nach einem der Ansprüche 1 bis 29, wobei
a) mindestens zwei Gassackteile (1, 2; 3, 4) des Gassackes derart ausgebreitet werden, dass sie einander überlappen,
b) die Gassackteile (1, 2; 3, 4) im Überlappungsbereich (U) derart miteinander verbunden werden, dass ein Gassackteil (2, 4) eine Hülle bildet, die eine Kammer (K2, K4) des Gassackes umschließt und eine Grenzfläche zwischen den beiden Kammern (K1, K2; K3, K4) des Gassackes ausbildet,
c) Abschnitte des aus den Gassackteilen (1, 2; 3, 4) bestehenden Gassackzuschnittes übereinander gelegt werden, so dass sie entlang des Randes des Gassackzuschnittes verbindbar sind,
d) die übereinander liegenden Gassackabschnitte zur Bildung eines Gassackes miteinander verbunden werden, so dass im aufgeblasenen Zustand des Gassackes ein Gassackteil (1, 3) eine Hülle bildet, die eine Kammer (K1, K3) des Gassackes glockenförmig umgibt und sich an der durch das erstgenannte Gassackteil (2, 4) gebildeten Hülle des Gassackes im Bereich der Grenzfläche zur Stabilisierung des Gassackes abstützt.

37. Verfahren nach Anspruch 36, **dadurch gekennzeichnet, dass**
- ein erstes Gassackteil entlang desjenigen Abschnitts seines äußeren Randes, der im Überlappungsbereich der mindestens zwei Gassackteile liegt, mit einem zweiten Gassackteil verbunden wird;
- die mindestens zwei verbundenen Gassackteile einmal um eine Faltachse geklappt werden;
- die nun im Überlappungsbereich aufeinander liegenden Teilabschnitte des äußeren Randes des zweiten Gassackteiles miteinander verbunden werden und
- die übereinander liegenden Abschnitte der mindestens zwei überlappenden Gassackteile entlang der gesamten Außenkontur der Ränder miteinander verbunden werden.

38. Verfahren nach Anspruch 36, **dadurch gekennzeichnet, dass** die beiden Gassackteile (1, 2; 3, 4) um eine Faltachse (A) geklappt werden, so dass zuvor beidseits der Faltachse (A) gelegene Gassackabschnitte übereinander liegen.

## Claims

1. A multipart airbag cutting for an airbag of an occupant protection device for motor vehicles, it being possible for the airbag to be produced by connecting the edges (10, 20; 30, 40) of the airbag cutting, having at least two mutually overlapping airbag parts (1, 2; 3, 4) which are connected to each other in the overlapping region (U), one airbag part (1, 3), in the inflated state of the airbag, forming a covering which surrounds one chamber (K1, K3) of the airbag in a bell-shaped manner, and another airbag part (2, 4) forming a covering which encloses a further chamber (K2, K4) of the airbag and, in the overlapping region (U), forms a boundary surface between two chambers (K1, K2; K3, K4) of the airbag, in the region of which surface the two coverings of the inflated airbag are supported on each other to stabilize the airbag.

2. The airbag cutting as claimed in claim 1,
**characterized by** such a design and connection of the mutually overlapping airbag parts (1, 2; 3, 4) that, in the inflated state of the airbag, the one airbag part (1, 3) surrounds the first chamber (K1, K3) in a bell-/hood-shaped manner.

3. The airbag cutting as claimed in claim 1 or 2, **characterized in that** the boundary surface (G) between the two chambers (K1, K2; K3, K4) is formed by the second airbag part (2, 4) which, in the inflated state, surrounds the second chamber (K2, K4) of the airbag.

4. The airbag cutting as claimed in one of the preceding claims, **characterized in that** the two airbag parts (1, 2; 3, 4), in the inflated state of the airbag, are supported on each other in the overlapping region (U).

5. The airbag cutting as claimed in one of the preceding claims, **characterized in that** the two airbag parts (1, 2; 3, 4) can be connected to each other in the overlapping region (U) in such a manner that a connecting line (11u, 11z; 41z, V), which annularly surrounds the boundary surface (G) of the airbag in the inflated state, is formed, it being possible for a connecting line (11u, 11z; 41z) to be formed by additional connecting means, for example in the form of a seam or an adhesive, and/or a connecting line (V) to be formed by the one airbag part (2, 4), in the inflated state of the airbag, being pressed on account of the internal pressure in the associated chamber (K2, K4) at least along the connecting line toward the other airbag part (1, 3) which forms the covering for an associated chamber (K1, K3).

6. The airbag cutting as claimed in one of the preceding claims, **characterized by** a folding axis (A) about which the two airbag parts (1, 2; 3, 4) can be folded in such a manner that by connection of the airbag sections, which lie one above the other after the folding, an airbag having two chambers (K1, K2; K3, K4) is formed.

7. The airbag cutting as claimed in claim 6, **characterized in that** the folding axis (A) forms an axis of symmetry with respect to the airbag cutting, the two airbag parts (1, 2; 3, 4) preferably being formed symmetrically with respect to the folding axis (A).

8. The airbag cutting as claimed in one of the preceding claims, **characterized in that** in the overlapping region (U) of the two airbag parts (1, 2; 3, 4) the one airbag part (1, 4) is connected along part (10u, 40u) of its outer edge (10u) to the other airbag part (2, 3).

9. The airbag cutting as claimed in claim 8, **characterized in that** the line-like connecting points (11u, 11z; 41z) of the one airbag part (1, 4) to the other airbag part (2, 3) are situated in the overlapping region (U) so close to the outer edge (10, 40) of the one airbag part (1, 4) that no further fastening points are situated between the connecting points (11u, 11z; 41z) and the corresponding region (10u, 40u) of the outer edge (10, 40).

10. The airbag cutting as claimed in one of the preceding claims, **characterized in that** in the overlapping region (U) the one airbag part (1, 4) is connected to the other airbag part (2, 3) in a region of the other airbag part (2, 3) which is situated outside the edge region (20, 30) of the other airbag part.

11. The airbag cutting as claimed in claim 10, **characterized in that** further fastening points (11a, 21a; 31a, 41a) for connecting airbag sections are situated between the connecting points (11u, 11z; 41z) of the other airbag part (2, 3) to the one airbag part (1, 4) and the outer edge (20, 30) of the other airbag part (2, 3).

12. The airbag cutting as claimed in one of the preceding claims, **characterized in that** the one airbag part (1) is connected to the other airbag part (2) along its entire section (10u) of the outer edge (10), which section is situated in the overlapping region (U).

13. The airbag cutting as claimed in one of claims 8 to 11, **characterized in that** the one airbag part (4) is connected to the other airbag part (3) only along a subsection of its section (40u) of the outer edge (40), which section is situated in the overlapping region (U).

14. The airbag cutting as claimed in claim 13, **characterized in that** the one airbag part (4) is connected to the other airbag part (3) only along a central subsection of its subsection (40u) of the outer edge (40), which subsection is situated in the overlapping region (U).

15. The airbag cutting as claimed in one of the preceding claims, **characterized in that** the two airbag parts (1, 2) only partially overlap with the other airbag part (2, 1) in each case.

16. The airbag cutting as claimed in one of claims 1 to 14, **characterized in that** one airbag part (4) overlaps completely with the other airbag part (3).

17. The airbag cutting as claimed in one of the preceding claims, **characterized in that** a holder (5, 6) for a gas generator is fixed on at least one of the airbag parts (1, 3).

18. The airbag cutting as claimed in claim 13 or 14 and claim 17, **characterized in that** the subsection of the outer edge (10, 40) of the one airbag (1, 4) is situated in the overlapping region of the holder (5, 6) with the outer edge (10, 40).

19. The airbag cutting as claimed in one of the preceding claims, **characterized in that** the airbag sections, which lie one above the other after the airbag cutting has been folded over around the folding axis (A), are connected to each other only along the outer edges (10a, 20a; 30a, 40a) of the airbag parts (1, 2; 3, 4), which edges form the outer contour of the entire airbag.

20. The airbag cutting as claimed in claim 19, **characterized in that** the airbag sections, which lie one above the other, are connected to each other along the entire outer contour of the airbag.

21. The airbag cutting as claimed in one of the preceding claims, **characterized in that** the connections are formed in each case by means of seams.

22. The airbag cutting as claimed in one of the preceding claims, **characterized in that** the two airbag parts (1, 2; 3, 4) are in each case assigned to a chamber (K1, K2; K3, K4) of the airbag as a covering.

23. The airbag cutting as claimed in one of the preceding claims, **characterized in that** one airbag part (2, 4) serves to completely enclose one chamber (K2, K4) of the airbag.

24. The airbag cutting as claimed in claim 23, **characterized in that** one airbag part (1) only partially encloses one chamber (K1) of the airbag and is connected to the other airbag part (2) in such a manner that the other airbag part (2) together with the one airbag part (1) completely encloses the one chamber (K1).

25. The airbag cutting as claimed in claim 24, **characterized in that** the one airbag part (1) has an open side surface, along the edge of which it is connected to the other airbag part (2) in such a manner that the other airbag part (2) together with the one airbag part (1) completely encloses the one chamber (K1).

26. The airbag cutting as claimed in one of the preceding claims, **characterized in that** one airbag part (4) is completely enclosed by the other airbag part (3).

27. The airbag cutting as claimed in claim 26, **characterized in that** one chamber (K4) of the airbag is completely enclosed by the one airbag part (4) and the other chamber (3) of the airbag is enclosed by the other airbag part (3), part of the one airbag part (4) additionally bounding the other chamber (K3).

28. The airbag cutting as claimed in one of the preceding claims, **characterized in that** the two chambers (K1, K2; K3, K4) are separated from each other by a section just of one airbag part (2; 4).

29. The airbag cutting as claimed in one of the preceding claims, **characterized in that** the two chambers (1, 2; 3, 4) of the airbag are connected to each other by an opening in the partition between the two chambers (K1, K2; K3, K4).

30. The airbag cutting as claimed in claim 29, **characterized in that** the gas generator is to be arranged in the region of the opening.

31. The airbag cutting as claimed in claim 30,
**characterized in that** the gas generator partially reaches through the opening.

32. The airbag cutting as claimed in one of the preceding claims, **characterized in that** the airbag cutting is provided and designed for an airbag of a side airbag module.

33. The airbag cutting as claimed in one of the preceding claims, **characterized in that** different chambers (1, 2; 3, 4) of the airbag are provided for protecting different regions of the body, in particular of the upper body, of an occupant.

34. An airbag for an occupant protection device for motor vehicles, having at least two chambers (K1, K2; K3, K4) which are separated from each other by a partition, one airbag covering which is formed by one airbag part (2, 4) completely enclosing one chamber (K2, K4) and forming a boundary surface between the two chambers (K1, K2; K3, K4) and an airbag covering formed by a further airbag part (1, 3) surrounding one chamber (K1, K3) in a bell-shaped manner, and the coverings of the two chambers (K1, K2; K3, K4) of the inflated airbag being supported on one another in the region of the partition to stabilize the airbag.

35. The airbag as claimed in claim 34 having the characterizing features of at least one of claims 1 to 33.

36. A method for producing an airbag from an airbag cutting as claimed in one of claims 1 to 29,
a) at least two airbag parts (1, 2; 3, 4) of the airbag being spread out in such a manner that they overlap each other,
b) the airbag parts (1, 2; 3, 4) being connected to each other in the overlapping region (U) in such a manner that one airbag part (2, 4) forms a covering which encloses one chamber (K2, K4) of the airbag and forms a boundary surface between the two chambers (K1, K2; K3, K4) of the airbag,
c) sections of the airbag cutting, which is composed of the airbag parts (1, 2; 3, 4), being placed one above the other, so that they can be connected along the edge of the airbag cutting,
d) the airbag sections, which lie one above the other, being connected to each other to form an airbag, so that, in the inflated state of the airbag, one airbag part (1, 3) forms a covering which surrounds one chamber (K1, K3) of the airbag in a bell-shaped manner and being supported on the covering of the airbag, which covering is formed by the first-mentioned airbag part (2, 4), in the region of the boundary surface to stabilize the airbag.

37. The method as claimed in claim 36, **characterized in that**
- a first airbag part is connected to a second airbag part along that section of its outer edge which is situated in the overlapping region of the at least two airbag parts;
- the at least two connected airbag parts are folded once around a folding axis;
- the subsections of the outer edge of the second airbag part, which subsections now rest on each other in the overlapping region, are connected to each other, and
- the sections of the at least two overlapping airbag parts, which sections lie one above the other, are connected to each other along the entire outer contour of the edges.

38. The method as claimed in claim 36, **characterized in that** the two airbag parts (1, 2; 3, 4) are folded around a folding axis (A), so that airbag sections which were previously situated on both sides of the folding axis (A) lie one above the other.

## Revendications

1. Découpe de sac gonflable en plusieurs parties pour un sac gonflable d'un dispositif de protection des occupants d'un véhicule, qui peut être fabriqué par liaison des bords (10, 20 ; 30, 40) de la découpe de sac gonflable, avec au moins deux parties de sac gonflable se chevauchant (1, 2 ; 3, 4), qui sont reliées ensemble dans la zone de chevauchement (U), une partie de sac gonflable (1, 3) constituant, à l'état gonflé du sac gonflable, une enveloppe, qui entoure à la manière d'une cloche une chambre (K1, K3) du sac gonflable, et une autre partie de sac gonflable (2, 4) constituant une enveloppe, qui enferme une autre chambre (K2, K4) du sac gonflable et forme, dans la zone de chevauchement (U), une surface de limitation entre deux chambres (K1, K2 ; K3, K4) du sac gonflable, dans la zone desquelles les deux enveloppes du sac gonflable gonflé s'appuient l'une contre l'autre pour la stabilisation du sac gonflable.

2. Découpe de sac gonflable selon la revendication 1, **caractérisée par** une conception et une liaison des parties de sac gonflable se chevauchant (1, 2 ; 3, 4) telle qu'à l'état gonflé du sac gonflable, l'une des parties de sac gonflable (1, 3) entoure à la manière d'une cloche/d'un bonnet la première chambre (K1, K3).

3. Découpe de sac gonflable selon la revendication 1 ou 2, **caractérisée en ce que** la surface de limitation (G) entre les deux chambres (K1, K2 ; K3, K4) est formée par la deuxième partie de sac gonflable (2, 4), laquelle entoure, à l'état gonflé, la deuxième chambre (K2 ; K4) du sac gonflable.

4. Découpe de sac gonflable selon l'une quelconque des revendications précédentes,
**caractérisée en ce que** les deux parties de sac gonflable (1, 2 ; 3, 4), à l'état gonflé du sac gonflable, s'appuient l'une contre l'autre dans la zone de chevauchement (U).

5. Découpe de sac gonflable selon l'une quelconque des revendications précédentes,
**caractérisée en ce que** les deux parties de sac gonflable (1, 2 ; 3, 4), peuvent être reliées ensemble dans la zone de chevauchement (U) de façon à ce qu'une ligne de liaison (11u, 11z ; 41z, V) entourant de manière annulaire la surface de limitation (G) du sac gonflable à l'état gonflé soit formée, une ligne de liaison (11u, 11z ; 41z,) pouvant être formée par des moyens de liaison supplémentaires, par exemple sous forme d'une couture ou d'un adhésif et/ou une ligne de liaison (V) pouvant être formée par le fait que l'une des parties de sac gonflable (2, 4) à l'état gonflé du sac gonflable est comprimée, en raison de la pression intérieure dans la chambre affectée (K2, K4) au moins le long de la ligne de liaison, contre l'autre partie de sac gonflable (1,3), laquelle constitue l'enveloppe pour une chambre associée (K1, K3).

6. Découpe de sac gonflable selon l'une quelconque des revendications précédentes,
**caractérisée par** un axe de pliage (A), autour duquel les deux parties de sac gonflable (1, 2 ; 3, 4) peuvent être pliées de façon à ce que, grâce à l'assemblage des segments de sac gonflable situés l'un au-dessus de l'autre après le pliage, un sac gonflable avec deux chambres (K1, K2 ; K3 ; K4) soit formé.

7. Découpe de sac gonflable selon la revendication 6, **caractérisée en ce que** l'axe de pliage (A) forme un axe de symétrie par rapport au segment de sac gonflable, les deux parties de sac gonflable (1, 2 ; 3, 4) étant conçues de préférence de manière symétrique par rapport à l'axe de pliage (A).

8. Découpe de sac gonflable selon l'une quelconque des revendications précédentes,
**caractérisée en ce que** dans la zone de chevauchement (U) des deux parties de sac gonflable (1, 2 ; 3, 4) l'une des parties de sac gonflable (1, 4) est reliée le long d'une partie (10u, 40u) de son bord extérieur (10u) à l'autre partie de sac gonflable (2, 3).

9. Découpe de sac gonflable selon la revendication 8, **caractérisée en ce que** les points de liaison à la manière d'une ligne (11u, 11z ; 41z) reliant l'une des parties de sac gonflable (1, 4) à l'autre partie de sac gonflable (2, 3) se situent dans la zone de chevauchement (U) si près du bord extérieur (10, 40) de l'une des parties de sac gonflable (1, 4) qu'il n'y a aucun autre point de fixation entre les parties de liaison (11u, 11z ; 41z) et la zone correspondante (10u, 40u) du bord extérieur (10, 40).

10. Découpe de sac gonflable selon l'une quelconque des revendications précédentes,
**caractérisée en ce que** dans la zone de chevauchement (U), l'une des parties de sac gonflable (1, 4) est reliée à l'autre partie de sac gonflable (2, 3) dans une zone de l'autre partie de sac gonflable (2, 3), qui se situe en dehors de la zone de bordure (20, 30) de l'autre partie de sac gonflable.

11. Découpe de sac gonflable selon la revendication 10, **caractérisée en ce qu'**entre les points de liaison (11u, 11z ; 41z) reliant l'autre partie de sac gonflable (2, 3) à une partie de sac gonflable (1, 4) et au bord extérieur (20, 30) de l'autre partie de sac gonflable (2, 3) se situent encore d'autres points de fixation (11a, 21a; 31a, 41a) pour l'assemblage de segments de sac gonflable.

12. Découpe de sac gonflable selon l'une quelconque des revendications précédentes,
**caractérisée en ce que** l'une des parties de sac gonflable (1) est reliée à l'autre partie de sac gonflable (2) le long de tout son segment (10u) du bord extérieur (10), situé dans la zone de chevauchement (U).

13. Découpe de sac gonflable selon l'une des revendications 8 à 11, **caractérisée en ce que** l'une des parties de sac gonflable (4) est reliée à l'autre partie de sac gonflable (3) seulement le long d'un segment partiel de son segment (40u) du bord extérieur (40), situé dans la zone de chevauchement (U).

14. Découpe de sac gonflable selon la revendication 13, **caractérisée en ce que** l'une des parties de sac gonflable (4) est reliée seulement le long d'un segment partiel central de son segment partiel (40u) du bord extérieur (40), situé dans la zone de chevauchement (U), à l'autre partie de sac gonflable (3).

15. Découpe de sac gonflable selon l'une quelconque des revendications précédentes,
**caractérisée en ce que** les deux parties de sac gonflable (1, 2) ne se chevauchent que partiellement avec l'autre partie respective de sac gonflable (2, 1).

16. Découpe de sac gonflable selon l'une quelconque des revendications 1 à 14,
**caractérisée en ce qu'**une partie de sac gonflable (4) chevauche complètement l'autre partie de sac gonflable (3).

17. Découpe de sac gonflable selon l'une quelconque des revendications précédentes,
**caractérisée en ce qu'**un logement (5, 6) pour un générateur de gaz est fixé à au moins une des parties de sac gonflable (1, 3).

18. Découpe de sac gonflable selon la revendication 13 ou 14 ou la revendication 17, **caractérisée en ce que** le segment partiel du bord extérieur (10, 40) d'un sac gonflable (1, 4) se situe dans la zone de chevauchement du logement (5, 6) avec le bord extérieur (10, 40).

19. Découpe de sac gonflable selon l'une quelconque des revendications précédentes, **caractérisée en ce que** les segments de sac gonflable placés l'un sur l'autre après le rabat de la découpe de sac gonflable autour de l'axe de pliage (A) ne sont reliés ensemble que le long des bords extérieurs (10a, 20a ; 30a, 40a) des parties de sac gonflable (1, 2 ; 3, 4), lesquels constituent le contour extérieur de tout le sac gonflable.

20. Découpe de sac gonflable selon la revendication 19, **caractérisée en ce que** les segments de sac gonflable situés l'un sur l'autre sont reliés ensemble le long de tout le contour extérieur du sac gonflable.

21. Découpe de sac gonflable selon l'une quelconque des revendications précédentes, **caractérisée en ce que** les liaisons sont respectivement constituées de coutures.

22. Découpe de sac gonflable selon l'une quelconque des revendications précédentes, **caractérisée en ce que** les deux parties de sac gonflable (1, 2 ; 3, 4) sont affectées respectivement à une chambre (K1, K2 ; K3, K4) du sac gonflable comme enveloppe.

23. Découpe de sac gonflable selon l'une quelconque des revendications précédentes, **caractérisée en ce qu'**une partie de sac gonflable (2, 4) sert à enfermer complètement une chambre (K2, K4) du sac gonflable.

24. Découpe de sac gonflable selon la revendication 23, **caractérisée en ce qu'**une partie de sac gonflable (1) n'enferme que partiellement une chambre (K1) du sac gonflable et est reliée à l'autre partie de sac gonflable (2) de façon à ce que l'autre partie de sac gonflable (2) enferme conjointement avec la partie de sac gonflable (1) la première chambre (K1).

25. Découpe de sac gonflable selon la revendication 24, **caractérisée en ce que** l'une des parties de sac gonflable (1) présente une surface latérale ouverte, le long du bord de laquelle elle est reliée à l'autre partie de sac gonflable (2) de façon à ce que l'autre partie de sac gonflable (2) conjointement avec la partie de sac gonflable (1) enferme complètement la première chambre (K1).

26. Découpe de sac gonflable selon l'une quelconque des revendications précédentes,
**caractérisée en ce que** l'une des parties de sac gonflable (4) est enfermée complètement par l'autre partie de sac gonflable (3).

27. Découpe de sac gonflable selon la revendication 28, **caractérisée en ce qu'**une chambre (K4) du sac gonflable est complètement enfermée par une partie de sac gonflable (4) et l'autre chambre (3) du sac gonflable est enfermée par l'autre partie de sac gonflable (3), une partie d'une partie de sac gonflable (4) limitant de surcroît l'autre chambre (K3).

28. Découpe de sac gonflable selon l'une quelconque des revendications précédentes,
**caractérisée en ce que** deux chambres (K1, K2 ; K3, K4) sont séparées l'une de l'autre par un segment d'exactement une partie de sac gonflable (2 ; 4).

29. Découpe de sac gonflable selon l'une quelconque des revendications précédentes,
**caractérisée en ce que** les deux chambres (1, 2 ; 3, 4) de sac gonflable sont reliées ensemble par une ouverture dans la paroi de séparation située entre les deux chambres (K1, K2 ; K3, K4).

30. Découpe de sac gonflable selon la revendication 29, **caractérisée en ce que** le générateur de gaz doit être disposé dans la zone de l'ouverture.

31. Découpe de sac gonflage selon la revendication 30, **caractérisée en ce que** le générateur de gaz traverse partiellement l'ouverture.

32. Découpe de sac gonflable selon l'une quelconque des revendications précédentes,
**caractérisée en ce que** la découpe de sac gonflable est prévue et conçue pour un sac gonflable d'un module d'airbag latéral.

33. Découpe de sac gonflable selon l'une quelconque des revendications précédentes,
**caractérisée en ce que** différentes chambres (1, 2 ; 3, 4) du sac gonflable sont prévues pour la protection de différentes parties du corps, en particulier de la partie supérieure du corps d'un passager.

34. Sac gonflable pour un dispositif de protection des occupants d'un véhicule avec au moins deux chambres (K1, K2 ; K3, K4), qui sont séparées l'une de l'autre par une paroi de séparation, une enveloppe de sac gonflable constituée d'une partie de sac gonflable (2, 4), enfermant complètement l'une des chambres (K2, K4) et constituant une surface de limitation entre les deux chambres (K1, K2 ; K3, K4), et une enveloppe de sac gonflable constituée d'une autre partie de sac gonflable (1, 3) entourant à la manière d'une cloche une chambre (K1, K3), les enveloppes des deux chambres (K1, K2 ; K3, K4) du sac gonflable gonflé s'appuiant l'une contre l'autre dans la zone de la paroi de séparation pour la stabilisation du sac gonflable.

35. Sac gonflable selon la revendication 34 avec les caractéristiques d'au moins une des revendications 1 à 33.

36. Procédé pour la fabrication d'un sac gonflable à partir d'une découpe de sac gonflable selon l'une des revendications 1 à 29, selon lequel
a) au moins deux parties de sac gonflable (1, 2 ; 3, 4) du sac gonflable sont élargies de façon à ce qu'elles se chevauchent,
b) les parties de sac gonflable (1, 2 ; 3, 4) dans la zone de chevauchement (U) sont reliées ensemble de façon à ce qu'une partie de sac gonflable (2, 4) forme une enveloppe, qui enferme une chambre (K2, K4) du sac gonflable et constitue une surface de limitation située entre les deux chambres (K1, K2 ; K3 ; K4) du sac gonflable,
c) des segments de la découpe de sac gonflable composée des parties de sac gonflable (1, 2 ; 3, 4) sont placés l'un sur l'autre de telle sorte qu'ils peuvent être reliés le long du bord de la découpe de sac gonflable,
d) les segments de sac gonflable situés l'un sur l'autre pour former un sac gonflable sont reliés ensemble de telle sorte qu'à l'état gonflé du sac gonflable, une partie de sac gonflable (1, 3) forme une enveloppe, qui entoure une chambre (K1, K3) du sac gonflable à la manière d'une cloche et s'appuie contre l'enveloppe de sac gonflable, formée par la partie de sac gonflable (2, 4) mentionnée en premier, dans la zone de la surface de limitation pour la stabilisation du sac gonflable.

37. Procédé selon la revendication 36, **caractérisé en ce que**
- une première partie de sac gonflable le long du segment de son bord extérieur situé dans la zone de chevauchement d'au moins deux parties de sac gonflable, est relié à une deuxième partie de sac gonflable ;
- au moins les deux parties de sac gonflable reliées sont rabattues une fois autour d'un axe de pliage ;
- les segments partiels du bord extérieur de la deuxième partie de sac gonflable, placés dorénavant l'un sur l'autre dans la zone de chevauchement, sont reliés ensemble et
- les segments situés l'un sur l'autre d'au moins deux parties de sac gonflable se chevauchant sont reliés ensemble le long de tout le contour extérieur des bords.

38. Procédé selon la revendication 36, **caractérisé en ce que** les deux parties de sac gonflable (1, 2 ; 3, 4) sont rabattues autour d'un axe de pliage (A) de telle sorte que les segments de sac gonflable situés auparavant des deux côtés de l'axe de pliage (A) sont placés l'un sur l'autre.
